# EUROPÄISCHE PATENTANMELDUNG

(11) **EP 4 089 456 A1**
(43) Veröffentlichungstag der Anmeldung: **16.11.2022**
(21) Anmeldenummer: 21173318.3
(22) Anmeldetag: 11.05.2021
(51) Int. Cl.: G02B 6/44, H02G 1/08

(54) **EINBLASGERÄT UND VERFAHREN ZUM BETRIEB EINES EINBLASGERÄTES**

(71) Anmelder: Janßen Ingenieurbüro GmbH, 26188 Edewecht (DE)
(72) Erfinder: Janßen, Kai, 26188 Edewecht (DE); Frölje, Volker, 26655 Westerstede (DE)
(74) Vertreter: Meyer, Ralph

(57) **Zusammenfassung**

Die Erfindung betrifft ein Einblasgerät zum Einschieben eines Kabels 2 oder Rohrs in ein Leerrohr 3, mit einer angetriebenen Vortriebeinrichtung 11 zum Vortrieb des einzuschiebenden Kabels 2 zu einer Rohraufnahme 9, in der ein Einschubende 4 des Leerrohres 3 aufnehmbar ist. Die Rohraufnahme 9 ist in einer Druckkammer 14 angeordnet, der Druckluft zur Unterstützung des Einschiebens des Kabels 2 in das Leerrohr 3 zuführbar ist. Dabei ist die Vortriebeinrichtung 11 bezüglich ihrer Vortriebsleistung 29 einstellbar und das Einblasgerät 1 dazu ausgebildet, die Vortriebseinrichtung 11 in Abhängigkeit wenigstens einer Messgröße 27 einzustellen, welche die Wirkung des Vortriebs auf das Kabel 2 repräsentiert. Außerdem wird ein Verfahren zum Betrieb des Einblasgeräts 1 vorgeschlagen.

Um ein möglichst schnelles Einschieben des Kabels bei größtmöglichem Schutz vor Beschädigungen des Kabels zu ermöglichen und Fehlbedienungen des Einblasgeräts entgegen zu wirken ist eine Messeinrichtung 25 zur Aufnahme der Messgröße 27 auf einer Abtriebseite 10 der Vortriebeinrichtung 11 angeordnet.

## Beschreibung

Die Erfindung betrifft ein Einblasgerät zum Einschieben eines Kabels oder Rohrs in ein Leerrohr gemäß dem Oberbegriff des Anspruchs 1. Die Erfindung betrifft außerdem ein Verfahren zum Betrieb eines solchen Einblasgeräts.

Einblasgeräte sind Einrichtungen zum Verlegen von Kabeln oder Rohren in Leerrohren und werden insbesondere im Netzausbau eingesetzt für das Verlegen von Glasfaserkabeln, das heißt Lichtwellenleitern, wobei das Einschieben in das Leerrohr von einem Luftstrom unterstützt wird. Das Glasfaserkabel wird dabei laufend zugeführt und über große Längen in das Leerrohr eingeschoben, welches bereits vorher verlegt wurde und sich in der Regel bereits im Erdreich befindet. Das Kabel wird von der eingeblasenen Luft getragen, so dass Reibungswiederstände reduziert sind und die Verlegung über Streckenabschnitte von mehreren Kilometern in einem Vorgang möglich ist.

Das einzuschiebende Glasfaserkabel kann dabei eine oder mehrere Adern haben. Auch sogenannte Speedpipes, das heißt Leerrohre mit speziell gestaltetem Inneren für Glasfaserkabel, werden mittels Einblasgeräten in Leerrohre eingeblasen.

Einblasgeräte weisen eine Vortriebseinrichtung auf zum Vortrieb des einzuschiebenden Kabels zu einer Rohraufnahme, in der das Einschubende des Leerrohrs aufgenommen wird. Die Vortriebseinrichtung wird angetrieben und transportiert das laufend zugeführte Kabel zur Rohraufnahme und bringt die Vortriebleistung auf, um das Kabel in das Leerrohr zu schieben. Dabei dürfen die vom Vortrieb auf das Kabel wirkenden Kräfte allerdings nicht so hoch sein, dass durch den Vortrieb das Kabel aufgrund der Reibungswiderstände im Leerrohr beschädigt wird, beispielsweise sich im Leerrohr aufrollt oder von der Vortriebeinrichtung beschädigt werden. Besonders bei dünnen Glasfaserkabeln muss in solchen Fällen das beschädigte Kabel aus dem Leerrohr herausgezogen werden und ein neues Glasfaserkabel eingeblasen werden.

Es ist bekannt, der Beschädigung des Kabels durch Einstellung der Vortriebgeschwindigkeit entgegen zu wirken, das heißt der Geschwindigkeit, mit der das Kabel dem Leerrohr zugeführt wird. Ist allerdings die Vortriebgeschwindigkeit zu hoch eingestellt, so sind oft Beschädigungen aufgrund der Reibung im Leerrohr die Folge. Bei anderen bekannten Einblasgeräten wird das Drehmoment des Antriebsmotors eingestellt, welches letztlich die beim Vortrieb auf das Kabel übertragene Kraft bestimmt. Bei Einstellung zu hoher Drehmomente kann das Kabel, insbesondere dessen Mantel, von der Vortriebeinrichtung bei der Leistung des Vortriebs beschädigt werden.

DK 2016 00154 U3 offenbart ein Einblasgerät für Glasfaserkabel, bei dem sowohl die Vortriebgeschwindigkeit als auch für das maximale Drehmoment, das auf das Glasfaserkabel übertragen werden kann, in Stufen eingestellt werden kann. Der Benutzer des bekannten Einblasgeräts kann somit die Vortriebleistung sowohl über das Drehmoment als auch über die Geschwindigkeit einstellen. Das bekannte Einblasgerät sieht eine Überwachung der Wirkung des Vortriebs auf das Glasfaserkabel vor und erfasst hierzu als Messgröße den Gleichlauf zwischen einer antreibenden und einer angetriebenen Vortriebrolle. Zwischen den gegensinnig drehenden Vortriebrollen des bekannten Einblasgeräts wird das Glasfaserkabel mitgenommen. Wandert das Glasfaserkabel unter der Wirkung des Vortriebs aus, läuft die nichtangetriebene Vortriebrolle nicht mehr synchron. Im Falle einer Nicht-Synchronisation zwischen der antreibenden Vortriebrolle und der angetriebenen Vortriebrolle wird der Vortrieb gestoppt, um das Glasfaserkabel vor Beschädigung zu schützen. Eine Messeinrichtung ist bei dem bekannten Einblasgerät in Transportrichtung vor den Vortriebrollen angeordnet und erfasst Bewegungen des durchlaufenden Kabels aus der Mittellage.

Bei dem bekannten Einblasgerät kann es trotz Überwachung des Gleichlaufs der Vortriebrollen zu Beschädigungen kommen, wenn der Benutzer die Vortriebsgeschwindigkeit und/oder das Drehmoment der Vortriebseinrichtung zu hoch eingestellt hat. Dann wird zwar der Vortrieb gestoppt, nachdem das Glasfaserkabel aufgrund Reibung im Leerrohr unter der Wirkung des Vortriebs knickt. Dann ist es jedoch oft bereits aufgrund der Fehlbedienung des Einblasgeräts zu Beschädigungen des Kabels gekommen. Es muss daher im Betrieb des Einblasgeräts darauf geachtet werden, dass die schrittweise einstellbare Vortriebgeschwindigkeit niedrig genug eingestellt ist, dass keine Beschädigungen des Kabels auftreten. Darüber hinaus können auch kurze und wiederkehrende Behinderungen der stetigen Zuführung des Glasfaserkabels -beispielsweise beim Abspulen des Kabels von einer Rolle- und anschließende Beschleunigungen durch die Vortriebseinrichtung zu einem ungewollten Abschalten des Vortriebs führen.

Der vorliegenden Erfindung liegt die Aufgabe zugrunde, ein Einblasgerät zum Einschieben eines Kabels in ein Leerrohr sowie ein Betriebsverfahren dafür zu schaffen, welche ein möglichst schnelles Einschieben des Kabels bei größtmöglichem Schutz vor Beschädigungen des Kabels beim Einschieben in das Leerrohr ermöglichen und Fehlbedienungen des Einblasgeräts, die zu Beschädigungen führen können, entgegen zu wirken.

Diese Aufgabe wird erfindungsgemäß durch ein Einblasgerät mit den Merkmalen des Anspruchs 1 gelöst. Die Aufgabe wird außerdem durch ein Verfahren zum Betrieb eines solchen Einblasgeräts mit den Merkmalen des Anspruchs 10 gelöst.

Gemäß der Erfindung ist vorgesehen, dass die Messgröße, welche die Wirkung des Vortriebs auf das Kabel repräsentiert und der Einstellung der Vortriebseinrichtung zugrunde gelegt wird, auf einer Abtriebseite der Vortriebeinrichtung angeordnet ist. Auf der Abtriebseite verlässt das stetig vorangetriebene Kabel die Vortriebseinrichtung. Die Messeinrichtung, welche die Messgröße mit qualitativer Aussage über die Wirkung des Vortriebs auf das eingeschobene Kabel aufnimmt, ist demnach in Vorschubrichtung des Kabels hinter der Vortriebseinrichtung angeordnet, so dass die Wirkung auf das Kabel abgekoppelt von Einflüssen auf der Zuführseite der Vortriebseinrichtung bewertet werden kann. Auf diese Weise können die Wirkungen des Vortriebs auf das Kabel präzise bewertet werden und der mögliche Betriebsbereich im Grenzbereich zur Neigung zu Beschädigungen ausgenutzt werden. Die Messgröße, welche die Wirkung des Vortriebs repräsentiert, wird demnach als mögliche Beschädigung des fortlaufend eingeschobenen Kabels aufgrund des Vortriebs interpretiert und überwacht, wobei im Fall des Annäherns oder Erreichens vorgegebener Vortriebsbedingungen die Vortriebsleistung angepasst wird, um optimale Bedingungen für weiteres Einschieben des Kabels zu schaffen. Im einfachsten Fall sind der Überwachung Schwellwerte für die erfasste Messgröße vorgegeben.

Vorteilhaft wird die Vortriebsleistung von einer Steuerung selbsttätig nach vorgegebenen Steuerprogrammen eingestellt und Vortriebsgeschwindigkeit und Drehmoment nach Vorgaben aufeinander abgestimmt, um eine optimale Vortriebsleitung zu erreichen.

In der bevorzugten Ausführungsform der Erfindung ist die Messeinrichtung, welche die Messgröße zur Bewertung der Vortriebsbedingungen aufnimmt, ein Kraftsensor, welcher der Rohraufnahme zugeordnet ist. Messgröße ist dabei die auf das Leerrohr wirkende Kraft und der Kraftsensor entsprechend ausgebildet und angeordnet. Die Erfindung hat dabei erkannt, dass die auf das Leerrohr wirkende Kraft als Gegenkraft zur Reibungskraft entsteht, welche auf das Kabel im Inneren des Leerrohres wirkt. Es kann daher ohne Kontakt zum Kabel die Messgröße mit Wirkung auf das Kabel aufgenommen werden und der Bewertung der aktuellen Wirkung des Einschiebens auf das Kabel zugrunde gelegt werden.
Vorteilhaft ist das Einblasgerät ausgebildet zur Einstellung der Druckluftzufuhr zur Druckkammer in Abhängigkeit der Messgröße der Messeinrichtung auf der Abtriebseite der Vortriebeinrichtung. Dadurch kann das Kabel zunächst ohne oder nur geringer Luftzuführung eingeschoben werden und erst bei Auftreten von Behinderungen des Einschiebens - indiziert durch die auf der Abtriebseite der Vorschubeinrichtung aufgenommene Messgröße- der Vortrieb des Kabels in das Leerrohr durch Druckluftzufuhr unterstützt werden. Entsprechend den aktuellen Vortriebsbedingungen gemäß der Bewertung der Messgröße auf der Abtriebseite und den Vorgaben zur Verbesserung der Vortriebsbedingungen wird der Durchsatz der Druckluftzufuhr eingestellt und dabei mit der Einstellung der Vortriebleistung abgestimmt. Steigt beispielsweise die Reibungskraft aufgrund des Vortriebs nach einer bestimmten Einschublänge, kann die Druckluft zunächst mit geringem Druck zugeführt werden. Bei weiterem Anstieg der Reibungskraft, welche durch Bewertung der Messgröße auf der Vortriebsseite der Vortriebseinrichtung hergeleitet wird, kann der weitere Einblasvorgang allmählich bis zu einem Maximum erhöht werden.

Eine genaue Einstellung der Vortriebsleistung ist in einer Ausführungsform der Vortriebseinrichtung mit zwei synchronisierten Vortriebrollen gegeben, welche das Kabel reibschlüssig mitnehmen und bezüglich Drehzahl und/oder Drehmoment einstellbar sind. Vorteilhaft werden die Vortriebsrollen synchron von einem Antriebsmotor, insbesondere einem Gleichstrommotor, angetrieben.

Die Abkopplung der Aufnahme der Messgröße mit Aussage über die Wirkung des Vortriebs auf das einzuschiebende Kabel von der Zuführseite der Vortriebseinrichtung erlaubt die Anordnung einer Wegmesseinrichtung auf der Zuführseite der Vortriebeinrichtung, welche dazu ausgebildet ist, laufend die bereits durchgelaufene Länge des Kabels zu erfassen. Bei Protokollierung der Messergebnisse der Wegmesseinrichtung kann unabhängig von der Erfassung der Wirkung des Vortriebs, die schließlich auf der Abtriebseite erfolgt, im Rahmen einer Diagnose des Verlegevorgangs des Kabels auf Abschnitte mit erhöhtem Reibungswiderstand zurück geschlossen werden.
In einer besonders vorteilhaften Ausführungsform ist die Einstellung des Einblasgeräts durch Berücksichtigung des Schlupfs am Kabel auf der Zuführseite verfeinert. Hierzu ist die Wegmesseinrichtung dazu ausgebildet, den Schlupf zu erfassen und das Einblasgerät dazu ausgebildet, die Vortriebeinrichtung und die der Druckluftzuführung unter zusätzlicher Berücksichtigung der Schlupfmessung der Wegmesseinrichtung einzustellen. Der Schlupf kann dabei über eine geeignete Software aus dem zur Verfügung stehenden Messwerten der Wegmesseinrichtung hergeleitet werden. Eine zuverlässige Schlupfmessung wird durch eine vorteilhafte Ausbildungsform der Erfindung erreicht, bei der die Wegmesseinrichtung zwei gegenläufig vom durchlaufenden Kabel mitgenommene Wegmessräder umfasst.
Die Bedienung des Einblasgeräts und das Einlegen des einzublasenden Kabels ist vereinfacht, wenn die Vortriebrollen und die Wegmessräder bezüglich ihres jeweiligen Abstands zueinander gemeinsam auseinander und zusammen bewegbar sind.

Der Bedienungsfreundlichkeit, aber auch der sicheren Aufnahme sowohl des Kabels als auch des Leerrohres, dient auch eine symmetrische Teilung der Rohraufnahme und der Druckkammer, welche als zweiteilige Kniehebelanordnung mit einer unteren Schale und einer oberen Schale ausgebildet sein können. Dabei ist eine obere Schale bewegbar und erlaubt in geöffneten Zustand ein Einlegen des Kabels und eine Befestigung des Leerrohres in der Rohraufnahme. Nach Schließen der Kniehebelanordnung wird die Funktion des Einblasgeräts freigegeben und die gewünschte Druckfestigkeit für die Druckluftzufuhr bereitgestellt. Die horizontale Teilung der Leitungsführungsebene ermöglicht dabei ein horizontales Drehen des Einblasgeräts um 180 Grad des Gerätes am Einsatzort, damit auch bei einer sehr langen Verlegestrecke das Kabel, insbesondere das Glasfaserkabel, ohne störungsanfällige Verbindungen verlegt werden kann.

Die Ausbildung der Druckkammer und damit der darin befindlichen Rohraufnahme für die Aufnahme des Leerrohres als Kniehebelanordnung entlastet die erfindungsgemäß auf der Abtriebseite der Vortriebeinrichtung liegende Messeinrichtung. Die Messeinrichtung ist nämlich gemäß der Erfindung der Rohraufnahme zugeordnet und erfasst letztlich Kraftwirkungen auf die Rohraufnahme in Längsrichtung beim Einschieben des Kabels. Die Kniehebelanordnung verhindert, dass Kräfte zum Schließen der Druckkammer und Halten im geschlossenen Zustand Einfluss auf das Messergebnis der Messeinrichtung haben.

Zur weiteren Unterstützung des Vortriebs des Kabels in das Leerrohr ist der Druckkammer eine Schmiermittelzuführung zugeordnet, deren Durchsatz in Abstimmung mit der Druckluftzufuhr und der Vortriebleistung einstellbar ist.

Ein Ausführungsbeispiel der Erfindung ist nachstehend anhand der Zeichnung näher erläutert. Es zeigen:
- Fig. 1: eine perspektivische Ansicht eines Ausführungsbeispiels eines Einblasgeräts gemäß der Erfindung,
- Fig.2: eine Seitenansicht des Einblasgeräts nach Fig. 1
- Fig. 3: Eine Schnittansicht des Einblasgeräts gemäß III-III in Fig. 2,
- Fig. 4: ein Ausführungsbeispiel eines Verfahrens zum Betrieb des Einblasgeräts nach Fig. 1 bis 3.

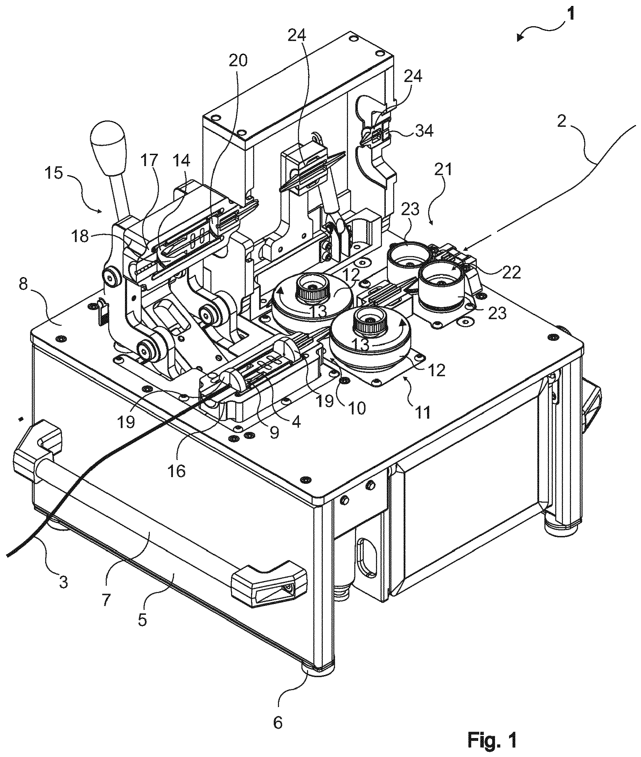

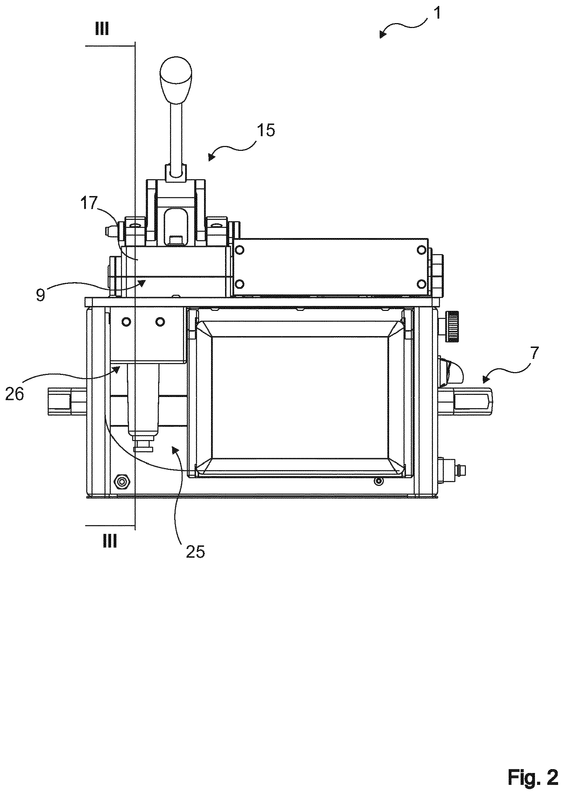

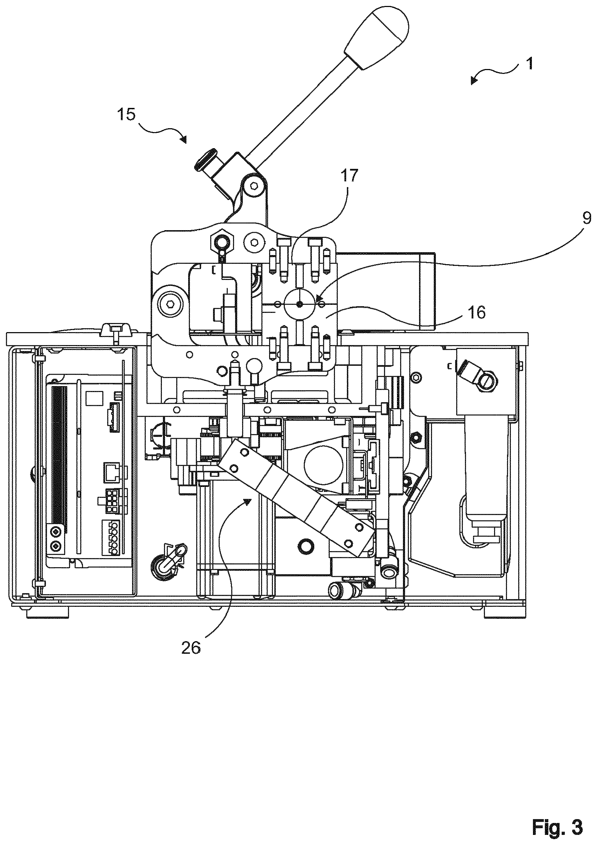

Fig. 1, Fig. 2 und Fig. 3 zeigen jeweils unterschiedliche Ansichten eines Einblasgeräts 1. Dabei sind für jeweils gleiche Bauteile die gleichen Bezugszeichen verwendet.

Das Einblasgerät 1 dient dem Einschieben von Kabeln, insbesondere Glasfaserkabeln, in bereits verlegte Leerrohre 3. Hierzu wird das Einschubende 4 eines verlegten Leerrohres 3 freigelegt und am Einsatzort in das Einblasgerät 1 eingelegt. Das Einblasgerät ist kompakt als tragbares Aufstellgerät ausgebildet und weist an seinem Gehäuse 5 mit Standfüssen 6 Traggriffe 7 auf, so dass es bequem zum Einsatzort transportiert werden kann.

Auf der im Wesentlichen horizontal liegenden Tischplatte 8 sind die wesentlichen Bauteile zum mechanischen Einschieben des Kabels 2 in das Leerrohr 3 angeordnet. Das Einblasgerät 1 weist eine Rohraufnahme 9 auf, in die das Einschubende 4 des Leerrohres 3 eingelegt und befestigt werden kann. Die Rohraufnahme 9 liegt auf der Abtriebseite 10 einer Vortriebeinrichtung 11, welche im Betrieb des Einblasgeräts 1 das Kabel 2 stetig zur Rohraufnahme 9 vortreibt und dort nach und nach in das Leerrohr 3 einschiebt. Die Vortriebeinrichtung 11 umfasst zwei synchronisierte Vortriebrollen 12, zwischen denen das eingelegte Kabel 2 reibschlüssig mitgenommen wird. Die Vortriebrollen 12 werden zum Vorschub des Kabels 2 von einem nicht gezeigten Gleichstrommotor in Pfeilrichtung 13 synchron angetrieben, wobei Drehzahl und Drehmoment von einer nicht gezeigten Steuerung einstellbar sind.

Die Rohraufnahme 9 ist in einer Druckkammer 14 angeordnet, welche im Inneren einer zweiteiligen Kniehebelanordnung 15 ausgebildet ist. Die Kniehebelanordnung 15 ist geteilt ausgebildet und weist eine untere Schale 16 und eine bewegliche obere Schale 17 auf. Über die Kniehebelanordnung 15 kann die Druckkammer 14 druckfest verschlossen werden. In der Druckkammer 14 ist eine Druckluftzufuhr 18 mit entsprechenden Öffnungen ausgebildet, über die bei Bedarf Druckluft zur Unterstützung des Einschiebens des Kabels 2 in das Leerrohr 3 zugeführt werden kann. Das Leerrohr 3 einerseits und das Kabel 2 andererseits werden jeweils mittels Dichtungen 19 eingelegt, so dass die Druckkammer 14 druckfest ist. Durch Schließen der Kniehebelanordnung 15 wird die Druckkammer 14 mit dem darin festgehaltenen Einschubende 4 des Leerrohres 3 hermetisch abgeschlossen.

Der Druckkammer 14 ist zudem eine Schmiermittelzuführung 20 zugeordnet, so dass zur weiteren Unterstützung des Einschiebens des Kabels 2 in das Leerrohr 3 ein Gleitmittel bedarfsweise zugesetzt werden kann. Über entsprechende Benetzungsöffnungen der Schmiermittelzuführung 20 wird das Gleitmittel auf das durchlaufende Kabel 2 gegeben.

Auf der Zuführseite 21 der Vortriebseinrichtung 11 weist das Einblasgerät 1 eine Wegmesseinrichtung 22 auf, welche dazu ausgebildet ist, laufend die bereits durchgelaufene Länge des Kabels 2 zu erfassen. Hierzu umfasst die Wegmesseinrichtung 22 zwei gegenläufig vom vorgetriebenen Kabel 2 mitgenommene Wegmessräder 23. Die Vortriebrollen 12 und die Wegmessräder 23 sind bezüglich ihres jeweiligen Abstands zueinander gemeinsam auseinander und zusammen bewegbar, so dass das einzuschiebende Kabel 2 eingelegt und anschließend die Vortriebrollen 12 und die Wegmessräder 23 mit geeignetem Anpressdruck an das eingelegte Kabel 2 gebracht werden können.

Zwischen den Vortriebsrollen 12 und den Wegmessrädern 23 sind Kabelführungen 24 angeordnet, welche Bestandteil der Kniehebelanordnung 15 sind und daher zweigeteilt sind. Im vorliegenden Ausführungsbeispiel sind mehrere Kabelführungen 24 angeordnet, wobei die in Vortriebrichtung des Kabels 2 vorn und außen liegende Kabelführung 24 als Abstreifer 34 ausgebildet ist.

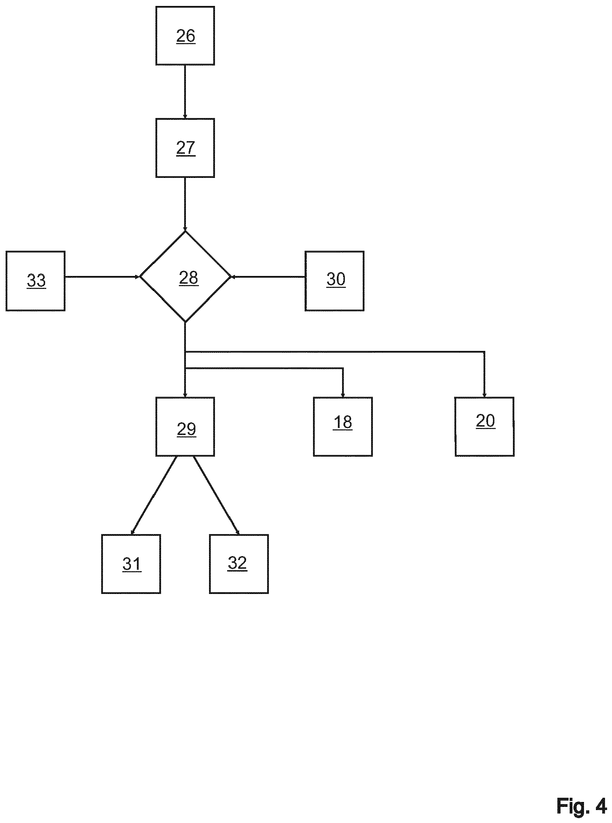

Das Einblasgerät 1 ist dazu ausgebildet, die Vortriebseinrichtung 11 sowie die Druckluftzufuhr 18 in Abhängigkeit wenigstens einer Messgröße einzustellen, welche die Wirkung des Vortriebs auf das Kabel 2 repräsentiert. Diese Messgröße wird auf der Abtriebseite 10 der Vortriebeinrichtung erfasst. Hierzu ist die entsprechende Messeinrichtung 25 ein Kraftsensor 26, welcher der Rohraufnahme 9 zugeordnet ist und zur Messung der auf das Leerrohr 3 beim Einschieben des Kabels 2 wirkende Längskraft ausgebildet ist. Diese Längskraft entsteht als Reaktionskraft auf die Reibungskraft, die im Inneren des Leerrohrs 3 auf das sich fortbewegende Kabel 2 wirkt. Die Messgröße 27 (Fig. 4) repräsentiert daher ebenso wie die Reibungskraft die Wirkung des Vortriebs auf das Kabel 2 und wird zur Überwachung des Betriebs des Einblasgeräts 1 zwecks Schutzes des Kabels 2 vor Beschädigungen herangezogen.

Fig. 4 zeigt schematisch die Einstellung der Vortriebleistung 29 in Abhängigkeit der Messgröße 27, welche vom Kraftsensor 26 auf der Abtriebseite 10 erfasst wird. Dabei wird die Wirkung des Vortriebs auf das Kabel durch Bewertung 28 der Messgröße 27 überwacht wird und die Vortriebleistung 29 entsprechend vorgegebener Vortriebsbedingungen 30 für die Messgröße 27 angepasst wird.

Die Vortriebleistung 28 wird unter maßgeblicher Berücksichtigung der Messgröße 27 über entsprechende Ansteuerung des Antriebsmotors der Vortriebseinrichtung 11, das heißt über das Drehmoment 31 und/oder die Drehgeschwindigkeit 32 eingestellt. Sobald bei der Bewertung 28 der Messgröße 27 im Vergleich mit den vorgegebenen Vortriebsbedingungen 30 eine Annäherung oder gar Erreichen als kritisch bestimmter Werte ermittelt wird, kann durch Anpassung der Vortriebsbedingungen der Einschubvorgang unter optimalen Bedingungen fortgesetzt werden.

In Abstimmung mit der Einstellung der Vortriebleistung 29 wird auch die Druckluftzufuhr 18 in Abhängigkeit der Bewertung 28 Messgröße 27 eingestellt. Damit abgestimmt erfolgt auch die Einstellung der Schmiermittelzuführung 20 und Zumessung von Gleitmittel.

Die Anordnung der Wegmesseinrichtung 22 auf der Zuführseite 21 der Vortriebseinrichtung 11 ermöglicht eine Verfeinerung der Bewertung 28 der Messgröße 27 im Hinblick auf die Vortriebsbedingungen im Leerrohr 3, wobei der Schlupf 33 in die Bewertung 28 des Vortriebs einbezogen wird. Hierzu ist das Einblasgerät 1 und insbesondere dessen Steuerung dazu ausgebildet, aus den Informationen der Wegmesseinrichtung 22 den aktuellen Schlupf 33 (Fig. 4) zu ermitteln.

Dabei werden die Vortriebleistung 28 und die Druckluftzufuhr 18 unter zusätzlicher Berücksichtigung des Schlupfs 33 des Kabels 2 auf der Zuführseite 21 der Vortriebeinrichtung 11 eingestellt.

### Bezugszeichenliste (Bestandteil der Beschreibung)

1 Einblasgerät
2 Kabel
3 Leerrohr
4 Einschubende
5 Gehäuse
6 Standfuß
7 Traggriff
8 Tischplatte
9 Rohraufnahme
10 Abtriebseite
11 Vortriebeinrichtung
12 Vortriebrolle
13 Pfeilrichtung
14 Druckkammer
15 Kniehebelanordnung
16 Untere Schale
17 Obere Schale
18 Druckluftzufuhr
19 Dichtung
20 Schmiermittelzuführung
21 Zuführseite
22 Wegmesseinrichtung
23 Wegmessrad
24 Kabelführung
25 Messeinrichtung
26 Kraftsensor
27 Messgröße
28 Bewertung
29 Vortriebsleistung
30 Vorgegebene Vortriebsbedingungen
31 Drehmoment
32 Drehgeschwindigkeit
33 Schlupf

## Patentansprüche

1. Einblasgerät zum Einschieben eines Kabels (2) oder Rohrs in ein Leerrohr (3), mit einer angetriebenen Vortriebeinrichtung (11) zum Vortrieb des einzuschiebenden Kabels (2) zu einer Rohraufnahme (9), in der ein Einschubende (4) des Leerrohres (3) aufnehmbar ist, wobei die Rohraufnahme (9) in einer Druckkammer (14) angeordnet ist, der Druckluft zur Unterstützung des Einschiebens des Kabels (2) in das Leerrohr (3) zuführbar ist, wobei die Vortriebeinrichtung (11) bezüglich ihrer Vortriebsleistung (29) einstellbar ist und das Einblasgerät (1) dazu ausgebildet ist, die Vortriebseinrichtung (11) in Abhängigkeit wenigstens einer Messgröße (27) einzustellen, welche die Wirkung des Vortriebs auf das Kabel (2) repräsentiert, **dadurch gekennzeichnet, dass** eine Messeinrichtung (25) zur Aufnahme der Messgröße (27) auf einer Abtriebseite (10) der Vortriebeinrichtung (11) angeordnet ist.

2. Einblasgerät nach Anspruch 1, **dadurch gekennzeichnet, dass** die Messeinrichtung (25) ein der Rohraufnahme (9) zugeordneter Kraftsensor (26) ist, welcher zur Messung der auf das Leerrohr (3) wirkenden Längskraft ausgebildet ist.

3. Einblasgerät nach Anspruch 1 oder 2, **dadurch gekennzeichnet, dass** das Einblasgerät (1) zur Einstellung der Druckluftzufuhr (18) zur Druckkammer (14) in Abhängigkeit der Messgröße (27) der Messeinrichtung (25) auf der Abtriebseite (10) der Vortriebeinrichtung (11) und in Abstimmung mit der Vortriebleistung (29) einzustellen.

4. Einblasgerät nach einem der vorhergehenden Ansprüche, **dadurch gekennzeichnet, dass** der Druckkammer (14) eine Schmiermittelzuführung (20) zugeordnet ist, deren Durchsatz in Abstimmung mit der Druckluftzufuhr (18) und der Vortriebleistung (29) einstellbar ist.

5. Einblasgerät nach einem der vorhergehenden Ansprüche, **dadurch gekennzeichnet, dass** die Vortriebeinrichtung (11) zwei synchronisierte Vortriebrollen (12) umfasst, welche bezüglich Drehgeschwindigkeit (32) und/oder Drehmoment (33) einstellbar sind.

6. Einblasgerät nach einem der vorhergehenden Ansprüche, **dadurch gekennzeichnet, dass** auf einer Zuführseite (21) der Vortriebeinrichtung (11) eine Wegmesseinrichtung (22) angeordnet ist, welche dazu ausgebildet ist, laufend die bereits durchgelaufene Länge des Kabels (2) zu erfassen.

7. Einblasgerät nach Anspruch 6, **dadurch gekennzeichnet, dass** die Wegmesseinrichtung (22) dazu ausgebildet ist, den Schlupf (33) des durchlaufenden Kabels (2) zu erfassen und das Einblasgerät (1) dazu ausgebildet ist, die Vortriebeinrichtung (11) und die Druckluftzufuhr (18) unter zusätzlicher Berücksichtigung des Schlupfs (33) einzustellen.

8. Einblasgerät nach Anspruch 6 oder 7, **dadurch gekennzeichnet, dass** die Wegmesseinrichtung (22) zwei reibschlüssig vom durchlaufenden Kabel (2) mitgenommene Wegmessräder (23) umfasst.

9. Einblasgerät nach Anspruch 8, **dadurch gekennzeichnet, dass** die Vortriebrollen (12) und die Wegmessräder (23) gemeinsam auseinander und zusammen bewegbar sind.

10. Verfahren zum Betrieb eines Einblasgerät nach einem der Ansprüche 1 bis 9, **dadurch gekennzeichnet, dass** die Wirkung des Vortriebs auf das Kabel (2) durch Bewertung (28) wenigstens der Messgröße (27) auf der Abtriebseite (10) der Vortriebeinrichtung (11) überwacht wird und die Vortriebleistung (29) entsprechend vorgegebener Vortriebsbedingungen (30) für die Bewertung (28) angepasst wird.

11. Verfahren nach Anspruch 10, **dadurch gekennzeichnet, dass** die Druckluftzufuhr (18) in Abstimmung mit der Einstellung der Vortriebleistung (29) in Abhängigkeit der Messgröße (27) der Messeinrichtung (25) auf der Abtriebseite (10) der Vortriebeinrichtung (11) eingestellt wird.

12. Verfahren nach Anspruch 10 oder 11, **dadurch gekennzeichnet, dass** die Vortriebleistung (29) und die Druckluftzufuhr (18) unter zusätzlicher Berücksichtigung des Schlupfs (33) des Kabels (2) auf der Zuführseite (21) der Vortriebeinrichtung (11) eingestellt wird.

13. Verfahren nach einem der Ansprüche 10 bis 12, **dadurch gekennzeichnet, dass** der Durchsatz einer Schmiermittelzuführung (20) zur Druckkammer(14) in Abstimmung mit der Druckluftzufuhr (18) und der Vortriebleistung (29) eingestellt wird.
